# EUROPÄISCHE PATENTSCHRIFT

(11) **EP 0 360 897 B1**
(45) Veröffentlichungstag und Bekanntmachung des Hinweises auf die Patenterteilung: **30.06.1993**
(21) Anmeldenummer: 88116008.9
(22) Anmeldetag: 28.09.1988
(51) Int. Cl.: G06F 9/46

(54) **Verfahren und Anordnung zur Behandlung von Unterbrechungsanforderungen und Prozessaufrufen in einem kombinierten Unterbrechungs- und Ablaufsteuersystem für wenigstens zum Teil im Echtzeitbetrieb arbeitende Datenverarbeitungsanlagen**
Method and apparatus for treating interrupt requests and process calls in a combined interrupt and sequence controlled system in data processing systems working at least partially in real time
Méthode et dispositif pour le traitement des demandes d'interruption et des appels de processus dans un système combiné d'interruptions et de commande séquentielle pour des systèmes de traitement de données qui fonctionnent partiellement en temps réel

(43) Veröffentlichungstag der Anmeldung: 04.04.1990
(73) Patentinhaber: Siemens Nixdorf Informationssysteme Aktiengesellschaft, 33102 Paderborn (DE)
(72) Erfinder: Hülters, Hubert, D-8152 Feldkirchen/Westerham (DE)
(74) Vertreter: Fuchs, Franz-Josef, Dr.-Ing.

(56) Entgegenhaltungen:
- EP-A- 0 052 713
- WO-A-81/02477
- IBM TECHNICAL DISCLOSURE BULLETIN, Band 27, Nr. 10B, März 1985, Seiten 5967-5968, New York, US; "Virtual machine group control system dispatching program"
- IBM TECHNICAL DISCLOSURE BULLETIN, Band 25, Nr. 10, März 1983, Seite 4957, New York, US; R.J. DUGAN et al.: "Data processing system with subclasses of I/O interruptions"

## Beschreibung

Die Erfindung betrifft ein Verfahren und eine Anordnung zur Behandlung von Unterbrechungsanforderungen und Prozeßaufrufen in einem kombinierten Unterbrechungs- und Ablaufsteuersystem für wenigstens zum Teil im Echtzeitbetrieb arbeitende Datenverarbeitungsanlagen entsprechend dem Oberbegriff des Patentanspruches 1.

Ein Prozeß umfaßt in der Regel eine von der Datenverarbeitungsanlage zu erbringende Arbeitseinheit, deren Ablauf in der Ausführung eines beliebig unterbrechbaren sequentiellen Programms mit gegebenem Adressenraum besteht, wobei ein übergeordnetes Betriebsprogramm die Prozesse gründet und auflöst, ihnen Betriebsmittel zuweist und entzieht, die notwendige Kommunikation zwischen den Prozessen sichert und das Fortschreiten der Prozesse gewährleistet. An das Betriebsprogramm werden auch die Benutzeraufträge als Aufforderung zur Arbeitsleistung gerichtet "Taschenbuch der Informatik" von Steinbuch, 3. Auflage 1974, Band 2, Seiten 195 bis 231.

Gerade beim Einsatz von Datenverarbeitungsanlagen zur Verfahrenssteuerung oder in Verbindung mit vielen Datenstationen müssen die von der Datenverarbeitungsanlage zu erfüllenden Arbeitsaufträge so abgewickelt werden, daß die Antwortzeiten der Datenverarbeitungsanlage den vorgegebenen zeitlichen Anforderungen genügen und die vorhandenen Betriebsmittel dazu möglichst günstig genutzt werden. Das erfordert vielfach die Unterbrechung eines laufenden Prozesses und die Umschaltung auf einen Prozeß höherer Priorität.

Anforderungen an Prozesse einer Datenverarbeitungsanlage können sowohl durch externe als auch interne Ereignisse ausgelöst werden, die in der Regel durch prioritätsbehaftete Unterbrechungssignale angezeigt werden. Diese müssen überwacht und bewertet werden, damit unabhängig von der Reihenfolge ihres Auftretens vordringlichere Anforderungen mit höherer Priorität bevorzugt behandelt werden können. Andererseits müssen die erfaßten und bewerteten Anforderungen zwischengespeichert und entsprechend ihrer Priorität an die jeweiligen Prozesse weitergeleitet und diese zum Ablauf gebracht werden.

Die Organisation der Behandlung von Unterbrechungsanforderungen und Prozeßaufrufen innerhalb einer Datenverarbeitungsanlage ist daher von sehr großer Bedeutung für deren Leistungsfähigkeit und deren Einsatzfähigkeit. Möglichkeiten dieser Organisation sind in "Elektronische Rechenanlagen", 22. Jahrgang (1980), Heft 1, Seiten 14 bis 21, aufgezeigt, während "Siemens-Zeitschrift", 47 (1973), Heft 5, Seiten 359 bis 364 und IBM Technical Disclosure Bulletin, Vol. 21, No. 9, Feb. 1979, Seiten 3501 bis 3504 Beispiele für die Unterteilung in prioritätsgestaffelte Unterbrechungs- und Ausführungsebenen zeigen, wobei beim letzteren Beispiel zusätzliche Warteschlangen für programmierte Anforderungen in den unteren Ebenen gezeigt sind.

Ein weiteres Beispiel ist auch aus EP-A-0 052 713 bekannt. Dort werden Unterbrechungsanforderungen und Prozeßaufrufe durch das Betriebssystem verwaltet. Dabei verfügt jeder aufgerufene Prozess über mehrere Warteschlangen, auf die die entsprechenden Anforderungen und Aufrufe je nach eingetragener Priorität verteilt werden, wobei innerhalb einer Warteschlange nochmals nach Prioritäten sortiert wird. Dadurch wird jedoch pro Anforderung bzw. Aufruf das Betriebssystem involviert. Dieses überprüft ferner zur Verteilung auf die entsprechenden Warteschlange die Prioritätszuordung und nimmt jeweils noch die Einordnung innerhalb einer Schlange vor. All dies beansprucht Rechenzeit, die aufgrund der unterschiedlichen Größe der Warteschlangen auch noch stark variieren kann.

Will man bei den in solchen Warteschlangen zwischengespeicherten Arbeitsanforderungen für vorgegebene Prozesse einer Prioritätsebene noch weitere Abstufungen hinsichtlich ihrer unterschiedlichen Dringlichkeit vornehmen, dann sind die einzelnen Arbeitsanforderungen zusätzlich mit Prioritätswerten zu versehen. Dies hat zur Folge, daß entweder bei jeder Eingliederung einer Arbeitsanforderung in die Warteschlange die Reihenfolge der Arbeitsanforderungen entsprechend der zugehörigen Prioritätswerte geändert werden muß oder daß bei ungeordneter Reihung vor einer Entnahme immer erst der Auftrag mit dem höchsten Prioritätswert ermittelt werden muß, was zu einer zusätzlichen Belastung des gemeinsamen Betriebsmittels Prozessor oder Verarbeitungseinheit führt. Insbesondere bedingt die Ordnung der Reihenfolge bei der Eintragung eines Auftrages in eine Warteschlange unkalkulierbare Zeitabschnitte, da die Dauer der Einordnung von der Anzahl der bereits eingetragenen und daher zu überprüfenden Aufträge abhängig ist, so daß der zeitgerechte Ablauf vordringlicher Prozesse, z.B. zur Aufnahme von über eine Datenleitung im Modemtakt eintreffenden Zeichen, nicht immer sichergestellt werden kann.

Aufgabe der Erfindung ist es daher, ein Verfahren und eine Anordnung der eingangs genannten Art so zu gestalten, daß ohne unnötige Belastungen der gemeinsamen Betriebsmittel durch zentrale Steuerungsaufgaben die Unterbrechungsanforderungen sicher erfaßt und die unterschiedlich zu gewichtenden Anforderungen ohne prioritätsbehaftete Angaben hinsichtlich ihrer Ausführungsreihenfolge abhängig von den vorgegebenen Systemerfordernissen freizügig gemischt werden können.

Diese Aufgabe wird hinsichtlich des der Erfindung zugrunde liegenden Verfahrens durch die kennzeichnenden Merkmale des Patentanspruches 1 gelöst.

Danach steuert der jeweils laufende Prozeß die Eintragung der von ihm ausgelösten programmbedingten Arbeitsaufrufe für andere Prozesse in die jeweilige Warteschlange selbst. Anstelle der einen Warteschlange je Prozeßebene sind in wenigstens einer der Prozeßebenen mehrere Warteschlangen mit unterschiedlicher Prioritätseinstufung vorgesehen, und zwar in der Weise, daß jeder der vorhandenen Prozeßebenen eine eigene Warteschlange mit gleicher Prioritätseinstufung zugeordnet ist, in die jeweils nur die von einem Prozeß der zugehörigen Prozeßebene ausgelösten Arbeitsaufrufe der Reihe nach eingetragen werden. Zum Auffinden der zugehörigen Warteschlange wird also jeweils nur die Prioritätsebene oder Priorität des aufzurufenden Prozesses und die Prioritätsebene bzw. Priorität des aufrufenden Prozesses benötigt.

Die in eine Warteschlange eingetragenen Arbeitsaufrufe sind dabei nicht von mitgeführten zu erstellenden Prioritätswerten belastet. Die Priorität ihrer Aufruffolge ergibt sich vielmehr allein aus der Prioritätseinstufung der zugehörigen Warteschlange, wobei in dieselbe Warteschlange eingetragene Arbeitsaufrufe jeweils in der Reihenfolge ihrer Eintragung wieder ausgetragen werden. Arbeitsaufrufe aus einer prioritätshöheren Prozeßebene werden daher allein durch die Strukturierung der Warteschlangen entsprechend den Prozessen zwangsläufig immer vorrangig behandelt. Ebenso wird bei einer Umgruppierung der Prozesse die neue Prioritätsverteilung zwangsläufig wirksam.

Gleichzeitig wird unter dem Gesichtspunkt der Gleichbehandlung von externen und programmbedingten Unterbrechungsanforderungen die Eintragung des Arbeitsaufrufes in eine Warteschlange in gleicher Weise durch ein prioritätsbehaftetes Unterbrechungssignal angezeigt und damit der Unterbrechungsbehandlung zugänlich. Diese reagiert unabhängig vom laufenden Prozeß und prüft in an sich bekannter Weise das zuletzt angezeigte Ereignis mit Bezug auf die bereits angezeigten Ereignisse und auf die Priorität der jeweils wirksamen Prozeßebene.

Der Eintragungsvorgang für programmbedingte Arbeitsaufrufe an einen anderen Prozeß oder auch an sich selbst ist daher sehr einfach gestaltet und von einheitlich kurzer Dauer, ohne daß eine Prozeßumschaltung auf das übergeordnete Betriebsprogramm notwendig ist. Letzteres wird nur notwendig, wenn ein angezeigtes Unterbrechungsereignis die Unterbrechung eines laufenden Prozesses erfordert oder wenn ein laufender Prozeß den Laufzustand verläßt und vom Betriebsprogramm daher ein anderer Prozeß aufgerufen und zum Ablauf gebracht werden kann.

Gemäß einer Weiterbildung der Erfindung entsprechend dem Patentanspruch 2 können anstelle der einen, einer Prozeßebene individuell zugeordneten Warteschlange auch mehrere Warteschlangen unterschiedlicher Prioritätseinstufung vorgesehen werden, so daß von Przozessen dieser Prozeßebene ausgelöste Arbeitsaufrufe abhängig von einer zusätzlichen gesonderten Aufrufpriorität in verschiedene Warteschlangen eingetragen werden können und so die Aufruffolge weiter differenziert werden kann.

Das der Erfindung zugrundeliegende Lösungsprinzip ist dabei unabhängig davon, ob für alle Prozeßebenen lediglich eine Verarbeitungseinheit als gemeinsames Betriebsmittel oder für jede Prozeßebene eine eigene Verarbeitungseinheit als gemeinsames Betriebsmittel für die Prozesse der jeweiligen Prozeßebene vorgesehen ist. Im einen Fall werden Unterbrechungsereignisse aller Prozeßebenen einheitlich erfaßt und überwacht, wobei nur in eine prioritätshöhere Prozeßebene weisende Ereignisse zu einer Prozeßunterbrechung führen, während im letzteren Falle der gleiche Mechanismus für jede Prozeßebene getrennt wirksam wird, wobei an die Stelle der verschiedenen Prioritäten zugeordneten Prozeßebenen die entsprechenden Prioritätsstufen innerhalb einer Prozeßebene treten.

Weitere Vorteile der Erfindung ergeben sich bei einer Weiterbildung gemäß Patentanspruch 7. Hiernach werden alle aus den Warteschlangen ausgetragenen Arbeitsaufrufe bedingungslos an den jeweils zugehörigen Prozeß weitergeleitet, gleichgültig ob der aufgerufene Prozeß ablauffähig ist oder nicht, d.h. das System behandelt alle Prozesse, als wären sie abläuffähig. Damit wird das die Zuteilung der Arbeitsaufrufe steuernde Betriebsprogramm von prozeßinternen Verwaltungsfragen, wie z.B. die Zustandsüberwachung der einzelnen Prozesse, vollkommen entlastet. Ebenfalls nach dem FIFO-Prinzip arbeitende prozeßinterne Warteschlangen stellen dabei sicher, daß die nicht erledigbaren Aufträge serialisiert anhängig bleiben, bis sie erledigt werden können. Auch erfolgen durch das Betriebsprogramm keine Rückmeldungen über erledigte Aufträge an den auftraggebenden Prozeß. Dies besorgt der ausführende Prozeß durch einen neuen Arbeitsaufruf an den auftraggebenden Prozeß selbst.

Das die Zuteilung von Arbeitsaufrufen steuernde Betriebsprogramm ist damit entsprechend der Zuordnung der Warteschlangen zu den Prozeßebenen nur für die Steuereung im Bereich der Prozeßebenen zuständig, so daß sein Zeitbedarf infolge des eingeschränkten Aufgabenbereichs in engeren Grenzen kalkulierbar ist und damit auf freigegebene Unterbrechungsanforderungen oder bei Freigabe der gemeinsamen Verarbeitungseinheit eher und berechenbarer reagiert werden kann.

Weitere Patentansprüche beziehen sich auf vorteilhafte, ergänzende Einzelmaßnahmen bezüglich der Prüfung der Warteschlangen auf Vorliegen von Arbeitsaufrufen, der Freigabe von Unterbrechungsanforderungen zur Behandlung, des Auffindens eines unterbrochenen Prozesses und der Sicherung der Daten zu einem unterbrochenen Prozeß sowie auf eine Anordnung zur Durchführung des erfindungsgemäßen Verfahrens.

Einzelheiten der Erfindung seien nachfolgend anhand eines in der Zeichnung dargestellten Ausführungsbeispieles näher erläutert. Im einzelnen zeigen
- FIG 1: ein Prinzipschaltbild gemäß der Erfindung,
- FIG 2: eine funktionsbezogene Einteilung der Prozeßebenen von FIG 1 mit einem Warteschlangensystem in einer der Prozeßebenen,
- FIG 3: die Zusammensetzung der Adresse für das Auffinden einer Warteschlange,
- FIG 4: ein Ablaufdiagramm für eine vorgegebene Prozeßfolge,
- FIG 5: ein Flußdiagramm für die Eintragung eines während eines Prozeßlaufes ausgelösten Arbeitsaufrufes in die zuständige Warteschlange und
- FIG 6: ein Flußdiagramm für die Zuteilung eines zur Behandlung freigegebenen Arbeitsaufrufes an den zuständigen Prozeß.

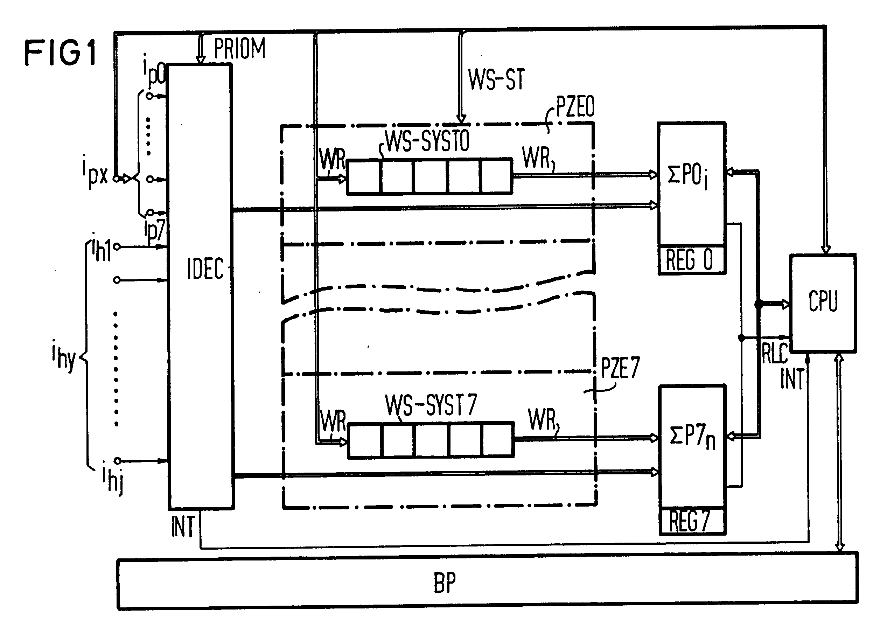

Das Prinzipschaltbild von FIG 1 zeigt im rechten Teil eine Verarbeitungseinheit CPU als gemeinsames Betriebsmittel für acht Gruppen von Prozessen ΣP0ᵢ bis ΣP7ₙ, die verschiedenen Prozeßebenen PZE0 bis PZE7 der Anlage individuell zugeordnet sind. Als weitere Prozeßgruppe ist im unteren Teil der FIG 1 die der übergeordneten Betriebsprogramme BP vorgesehen, die in gleicher Weise mit der Verarbeitungseinheit CPU zusammenarbeiten.

Den einzelnen Prozeßgruppen ist jeweils eines der individuellen Warteschlangensysteme WS-SYST0 bis WS-SYST7 zugeordnet, in denen programmbedingte Arbeitsaufrufe WR an die einzelnen Prozesse, z.B. P0ᵢ, der jeweiligen Prozeßebene, z.B. PZE0, anhand der Steuerinformation WS-ST zwischengespeichert werden, bis sie an den jeweils zugehörigen Prozeß weitergeleitet und ausgeführt werden können.

Welcher der Prozesse jeweils durch Zuteilung der Verarbeitungseinheit CPU zum Ablauf gebracht wird, hängt von der Einrichtung IDEC im linken Teil von FIG 1 ab, der alle einen Arbeitsaufruf WR kennzeichnenden Ereignisse iₓₓ als Unterbrechungsanforderungen mitgeteilt werden.

Diese Unterbrechungsanforderungen können sowohl durch interne als auch durch externe Unterbrechungsereignisse ausgelöst werden, wobei zwischen programmbedingten und sonstigen durch die Hardware der Anlage ausgelösten Unterbrechungsanforderungen zu unterscheiden ist.

In FIG 1 sind diese beiden Gruppen mit iₚₓ und mit i_{hy} bezeichnet, wobei sich die Gruppe iₚₓ auf die programmbedingten Anforderungen bezieht, zu denen in die Warteschlangen Arbeitsaufrufe WR einzutragen sind. Während in der Gruppe i_{hy} für jedes Ereignis ein eigener Eingang iₕₗ bis iₕⱼ mit individueller Prioritätseinstufung vorgesehen ist, weist die Gruppe iₚₓ für jede Unterbrechungs- und Prozeßebene PZE0 bis PZE7 nur einen Eingang, z.B. iₚ₀ für die Prozeßebene PZE0, auf, der mit der entsprechenden Priorität gewichtet ist.

Allen Anforderungseingängen iₓₓ ist innerhalb der Einrichtung IDEC in bekannter Weise eine bistabile Kippstufe als Anzeigeelement für das Vorliegen einer Anforderung zugeordnet, die bei Auftreten der Anforderung gesetzt und bei Weiterleitung der Anforderung als Arbeitsaufruf an den zuständigen Prozeß wieder zurückgesetzt wird.

Mit allen diesen bistabilen Anzeigeelementen ist des weiteren ein Prioritätsnetzwerk gekoppelt, das jeweils die Anforderung mit der höchsten Priotitätseinstufung auswählt. Die Priorität dieser ausgewählten Anforderung wird dann mit der Priorität der Prozeßebene des jeweils laufenden Prozesses verglichen, und nur wenn die Priorität der ausgewählten Anforderung höher ist, wird von der Einrichtung IDEC ein die Unterbrechung des laufenden Prozesses herbeiführendes Signal INT ausgelöst und damit die ausgewählte Anforderung zur Behandlung freigegeben.

Die als Vergleichswert dienende Priorität ist also veränderbar und wird für jeden Prozeßlauf mit der Steuerinformation PRIOM zur Einstellung eines z.B. als Maske arbeitenden Registers neu vorgegeben.

Die Einrichtung IDEC arbeitet vollkommen unabhängig von den Prozessen und kann mit dem Signal INT jederzeit eine Unterbrechung der Nutzprozesse P0ᵢ bis P7ₙ und eine Umschaltung auf die Betriebsprogramme BP herbeiführen, die dann den weiteren Steuerungsablauf bestimmen.

Ebenso kann am Ende eines jeden abgelaufenen Prozesses oder bei einer Behinderung eines Prozeßlaufs, z.B. infolge eines Übergangs in den Wartezustand, durch den jeweiligen Prozeß die gemeinsame Verarbeitungseinheit CPU mit dem Signal RLC freigegeben und damit die Steuerung an die übergeordneten Betriebsprogramme BP übergeben werden.

Um nach Auslösung der Signale INT oder RLC sicherzustellen, an welchem Prozeß die jeweils zur Behandlung freigegebene Unterbrechungsanforderung als Arbeitsaufruf weiterzuleiten ist, ist mit jedem Anforderungseingang iₓₓ ein Register für eine Hinweisadresse gekoppelt, die bei Anforderungen über die Eingänge der Gruppe i_{hy} unmittelbar auf den zugehörigen Prozeßkontrollblock und bei programmbedingten Anforderungen über die Eingänge der Gruppe iₚₓ auf das jeweils zugehörige Warteschlangensystem, z.B. WS-SYST0, verweist.

Außerdem ist für jede Prozeßgruppe ΣP0ᵢ bis ΣP7ₚ noch ein Speicher, z.B. einer der Registersätze REG0 bis REG7, zur Zwischenspeicherung und Sicherung der für die Fortsetzung eines unterbrochenen Prozesses notwendigen Daten vorgesehen.

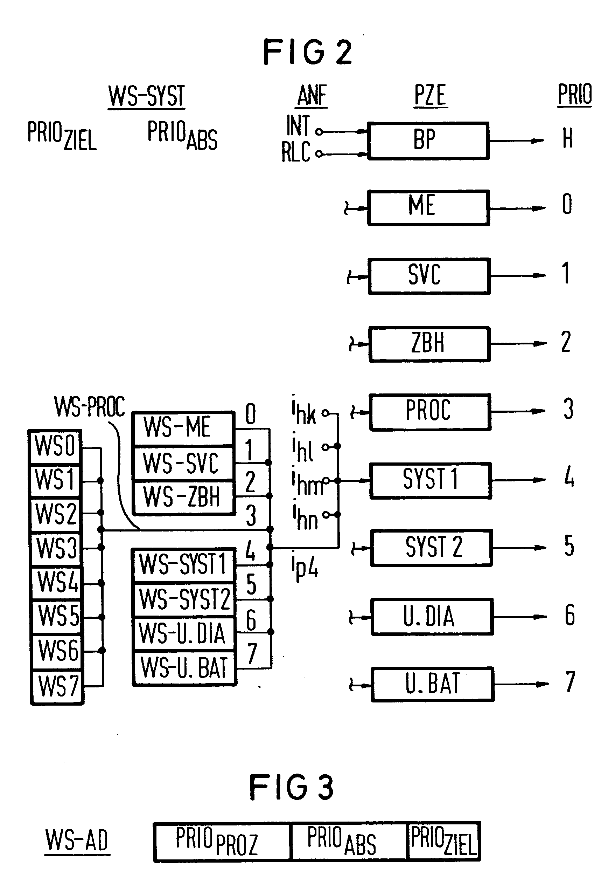

FIG 2 zeigt im rechten Teil die verschiedenen Prozeßebenen PZE mit ihrer jeweiligen Priorität PRIO in der Reihenfolge ihres Prioritätsranges, wobei die höchste Priorität den Betriebsprogrammen BP als oberste Prozeßebene zugeordnet ist, die lediglich durch die Signale INT und RLC als Anforderung ANF aufrufbar ist. Die darunterliegenden Prozeßebenen sind folgenden Funktionen mit Bezug auf ein Datenübertragungssystem zugeordnet:
- ME:: Behandlung von Maschinenfehlern
- SVC:: Ausführung von Supervisoraufgaben
- ZBH:: Bedienung von Leitungspuffern und Zeichenbehandlung
- PROC:: Ausführung von Leitungsprozeduren, z.B. Blockendebehandlung, Nachrichtentransport
- SYST1:: Ausführung von Systemfunktionen
- SYST2:: Ausführung von Systemfunktionen, z.B. Speicherverwaltung und Zuteilung
- U.DIA:: Ausführung von Benutzerfunktionen bei Dialogbetrieb
- U.BAT:: Ausführung von Benutzerfunktionen bei Stapelbetrieb

Wie sich aus den einzelnen Funktionen ergibt, genießt im Rahmen der Datenübertragung die Bedienung der Leitungspuffer und die Zeichenbehandlung die höchste Priorität, da hierbei die Übertragungsgeschwindigkeit der Zeichen und die zu bedienende Anzahl von Übertragungsleitungen äußerst geringe Reaktionszeiten erfordern. Nicht so zeitkritische Anforderungen sind mit der Ausführung der Leitungsprozeduren verbunden, während demgegenüber die unterstützende Systemfunktionen, wie Speicherverwaltung für die Nachrichten, Quittungsmeldung usw., die auch in einer einzigen Prozeßebene zusammengefaßt sein können, weniger zeitkritisch und mehr einem Wartesystem zuzurechnen sind. Letzteres gilt dann insbesondere für die mit der Verarbeitung von Benutzeraufträgen verbundene Ausführung von Benutzerfunktionen, wobei der Dialogbetrieb, wie im vorliegenden Fall angenommen, vorrangig vor dem Stapelbetrieb behandelt werden kann.

In jeder dieser Prozeßebenen PZE werden nun die durch die dieser Prozeßebene zugeordneten Unterbrechungsereignisse iₓₓ ausgelösten Arbeitsaufrufe nach ihrer Freigabe zur Behandlung den zuständigen Prozessen zugeleitet. Als Beispiel sind in FIG 2 die auf die Prozeßebene PZE4 zur Ausführung von Systemfunktionen SYST1 bezogenen Ereignisse iₕₖ bis iₕₙ und iₚ₄ in der Rangfolge mit fallender Priorität innerhalb der Prozeßebene als Anforderung ANF angegeben, so daß bei Freigabe dieser Prozeßebene zur Bearbeitung von Arbeitsaufrufen zunächst die Einzelaufrufe in der Folge iₕₖ, iₕₗ, iₕₘ und iₕₙ bearbeitet werden und dann die im Rahmen des Gruppenaufrufes iₚ₄ vorliegenden programmbedingten Arbeitsaufrufe, die in einem gemäß der Erfindung ausgebildeten Warteschlangensystem WS-SYST zwischengespeichert sind.

Dieses ebenfalls nur für die Prozeßebene PZE4 zur Ausführung von Systemfunktion SYST1 dargestellte Warteschlangensystem WS-SYST besteht aus einer der Anzahl der vorhandenen Prozeßebenen PZE0 bis PZE7 entsprechenden Anzahl von Warteschlangen WS-...., von denen jeweils eine einer der Prozeßebenen individuell mit gleicher Prioritätseinstufung zugeordnet ist, also z.B. die Warteschlange WS-ZBH mit der Priorität 2 der Prozeßebene PZE2 für die Zeichenbehandlung ZBH.

Bei Freigabe eines durch das Gruppenereignis iₚ₄ angezeigten Arbeitsaufrufes werden - ohne zwischenzeitlich auftretende weitere Unterbrechungen - zunächst immer die Arbeitsaufrufe aus der Warteschlange mit der höchsten Prioritätseinstufung bearbeitet, bevor Arbeitsaufrufe aus einer Warteschlange mit niedrigerer Priorität bearbeitet werden. Für die Bearbeitung der in den Warteschlangen zwischengespeicherten Arbeitsaufrufe ist also immer die Priorität PRIO_{ABS} der Prozeßebene maßgebend, der der den Aufruf veranlassende Prozeß als Absender angehört, während die Priotität des aufzurufenden Prozesses PRIO_{PROZ} die Prozeßebene bestimmt, in der die Warteschlange für den zwischenzuspeichernden Arbeitsaufruf zu finden ist.

Das hat zur Folge, daß die jeweils anzusteuernde Warteschlange durch einfache Adressenbildung aus den beiden Priotitätsangaben PRIO_{PROZ} und PRIO_{ABS} entsprechend der Konfiguration der Prozesse identifizierbar und auswählbar ist, wie die Darstellung der Warteschlangenadresse WS-AD in FIG 3 zeigt, und daß die Arbeitsaufrufe frei von irgendwelchen, die Bearbeitungsreihenfolge festlegenden Angaben zwischengespeichert werden können, da sich ihre Prioritätseinstufung allein aus dem Ort und der Reihenfolge der Zwischenspeicherung ergibt.

Zur weiteren Differenzierung der Arbeitsrangfolge von Arbeitsaufrufen kann, wie in FIG 2 weiterhin für die Warteschlange WS-PROC gezeigt ist, die einzige Warteschlange durch eine Gruppe prioritätsgestaffelter Warteschlangen, z.B. WS0 bis WS7, mit den zusätzlichen Prioritäten PRIO_{ZIEL}, z.B. der Stufung 0 bis 7 in fallender Richtung, ersetzt werden. Auf diese Weise können Arbeitsaufrufe von Prozessen derselben Prozeßebene und damit derselben Priorität PRIO_{ABS} bei den auftragsausführenden Prozessen mit unterschiedlicher Priorität PRIO_{ZIEL} bearbeitet werden, wobei diese Priorität vom auftraggebenden Prozeß festgelegt wird. In diesem Fall bildet gemäß FIG 3 die zusätzliche Angabe PRIO_{ZIEL} einen weiteren Adressenteil der die jeweilige Warteschlange bestimmenden Adresse WS-AD. Auch gilt hierfür in gleicher Weise, daß zunächst alle Arbeitsaufrufe aus der Warteschlange mit der jeweils höchsten Prioritätseinstufung weitergeleitet werden, bevor Arbeitsaufrufe aus einer Warteschlange mit niedrigerer Prioritätseinstufung zur Bearbeitung gelangen. Jedoch wird dadurch die absenderbezogene Bearbeitungsreihenfolge für die Arbeitsaufrufe durch die anderen auftraggebenden Prozesse nicht beeinträchtigt, sondern durch die entsprechend der Priorität PRIO_{ZIEL} vorgesehenen Warteschlangen wird lediglich die Bearbeitung innerhalb der zugehörigen Prozeßebene unterteilt.

Das in FIG 2 nur für eine Prozeßebene, nämlich die Prozeßebene SYST1, gezeigte Warteschlangensystem WS-SYST kann in gleicher Weise für mehrere oder gar alle Prozeßebenen vorgesehen werden, so daß den von der Datenverarbeitungsanlage und im Hinblick auf deren Einsatz gestellten Anforderungen in vielfältiger Weise entsprochen werden kann.

Dabei ist es vollkommen unerheblich, ob, wie in den meisten Fällen und auch in FIG 1 gezeigt, nur eine einzige Verarbeitungseinheit CPU als gemeinsames Betriebsmittel für alle Prozeßebenen zur Verfügung steht, oder ob für jede Prozeßebene eine individuelle Verarbeitungseinheit vorgesehen wird, wobei im letzteren Falle die in FIG 1 gezeigte Struktur für die einzelnen Prozeßebenen vorzusehen ist und die einzelnen Prioritätsstufen innerhalb der einzelnen Prozeßebene wie die Prozeßebenen von FIG 1 behandelt werden, d.h. die Einrichtungen IDEC und die Betriebsprogramme BP als gesonderte Prozeßgruppe sind für jede Prozeßebene mit individueller Verarbeitungseinheit gesondert vorzusehen. Auch braucht bei Freigabe der Verarbeitungseinheit durch einen Prozeß lediglich die Prioritätslage innerhalb der zugehörigen Prozeßebene und das zugehörie Warteschlangesystem überprüft zu werden.

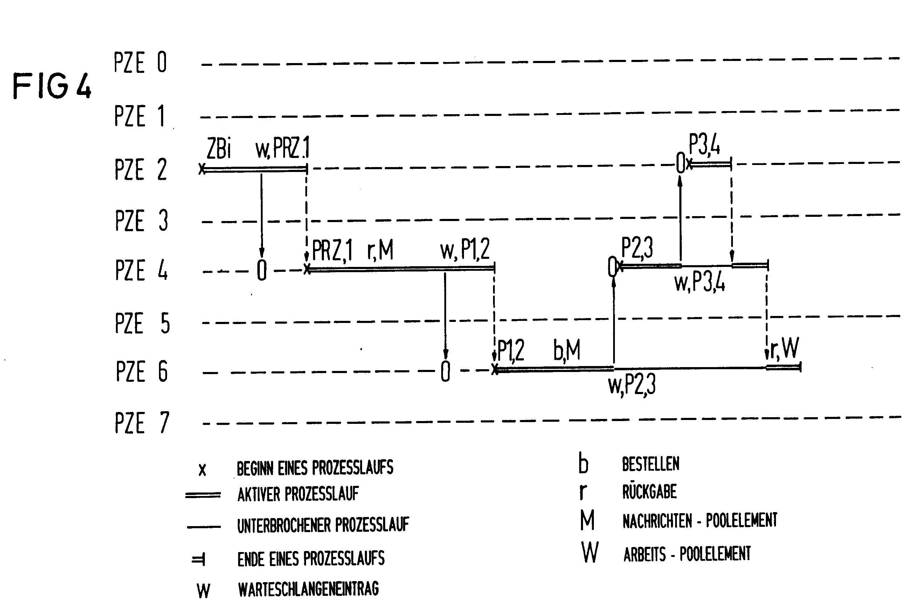

FIG 4 zeigt ein Ablaufdiagramm für eine auf mehrere der Prozeßebenen PZE0 bis PZE7 von FIG 1 und FIG 2 verteilte Prozeßfolge im Rahmen einer von einem Benutzer im Dialogbetrieb ausgelösten Datenübertragung, wobei der Zeichenbehandlungsprozeß ZBi auf der Prozeßebene PZE2 durch eine nach der Aussendung einer Nachricht erhaltene Prozedurquittung gestartet worden ist, was zu einem Arbeitsaufruf w für den Systemprozeß PRZ,1 der Prozeßebene PZE4 zwecks Freigabe des benutzten Nachrichten-Poolelementes M führt. Da der aufgerufene Prozeß eine niedrigere Priorität aufweist, wird der laufende Prozeß auf der Prozeßebene PZE2 zunächst zu Ende geführt, bevor der neue Prozeß PRZ,1 zum Ablauf gebracht wird und ein Auftrag w für den Benutzer zwecks Meldung der eingetroffenen Quittung an den zuständigen Prozeß P1,2 auslöst. Da eine weitere Nachricht auszusenden ist, wird ein neues Nachrichten-Poolelement M bestellt, die neue Ausgabenachricht zusammengestellt und ein Auftrag w an den den Transport abwickelnden Prozeß P2,3 auf der Prozeßebene PZE4 ausgelöst, der wiederum auf der Prozeßebene PZE2 den Prozeß P3,4 zur Aussendung der Nachricht aufruft. Da die Prozesse P2,3 und P3,4 eine höhere Priorität aufweisen, führen die jeweiligen Aufträge w jeweils zur Unterbrechung des gerade laufenden Prozesses P1,2 bzw. P2,3, bis der aufgerufene Prozeß P3,4 mit der höchsten Priorität beendet ist. Danach werden dann die unterbrochenen Prozesse P2,3 und danach P1,2 entsprechend ihrem Prioritätsrang zu Ende geführt und zum Schluß das vom Benutzerprozeß beanspruchte Arbeits-Poolelement wieder freigegeben.

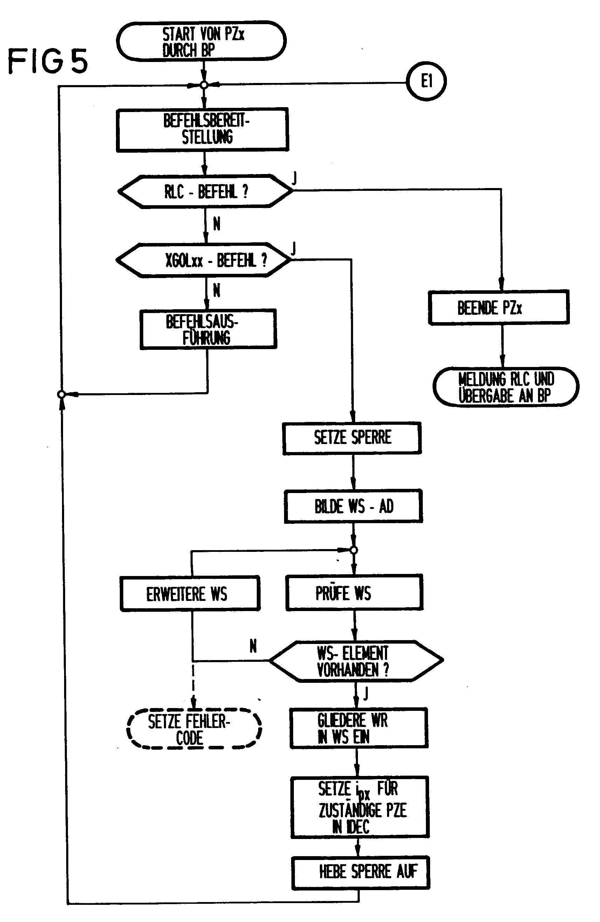

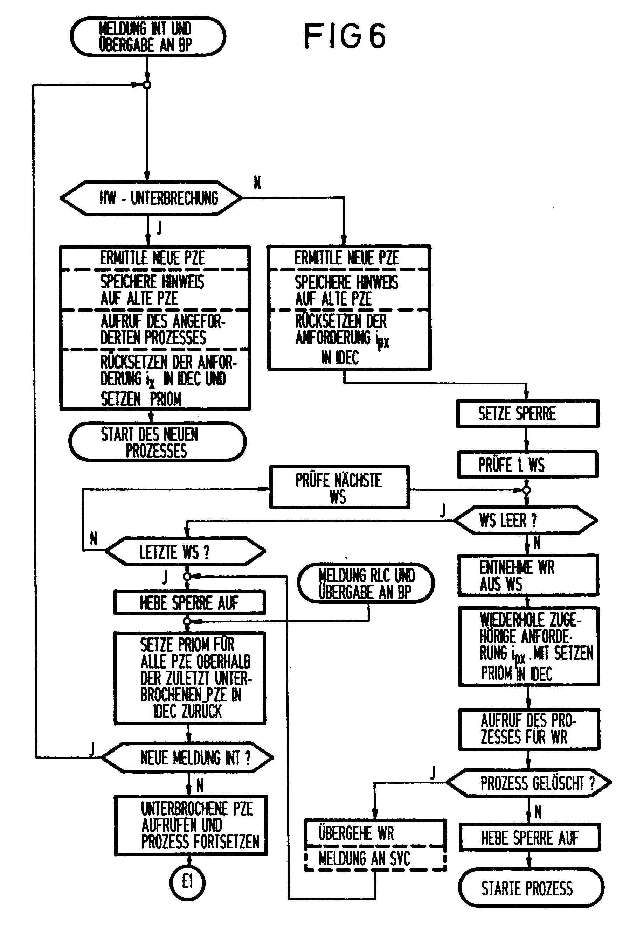

Die Arbeitsweise der Anordnung von FIG 1 wird nachfolgend anhand der Flußdiagramme von FIG 5 und FIG 6 erläutert, wobei das Flußdiagramm von FIG 5 sich auf den normalen Ablauf der einzelnen Prozesse und die Eintragung von durch diesen veranlaßten Arbeitsaufrufen WR in die jeweilige Warteschlange im Rahmen des jeweiligen Prozeßlaufes und das Flußdiagramm von FIG 6 auf den die Behandlung von Unterbrechungen betreffenden Teil der Betriebsprogramme BP bezieht.

Nach Start eines Prozesses PZx durch das Betriebsprogramm BP wird gemäß FIG 5 in an sich bekannter Weise ein Befehl nach dem anderen des jeweils zugehörigen Programmes abgearbeitet. Dabei wird bei jeder Befehlsbereitstellung geprüft, ob ein RLC-Befehl vorliegt und daher der Prozeßlauf mit Freigabe der Verarbeitungseinheit CPU zu beenden ist, so daß die Steuerung wieder auf das Betriebsprogramm BP übergeht, um den nächsten Prozeß aufzurufen. Dieser Ablauf ist im linken oberen Teil von FIG 5 wiedergegeben.

Liegt kein RLC-Befehl vor, wird geprüft, ob gegebenenfalls ein einen Arbeitsaufruf veranlassender Befehl XGOLxx zu bearbeiten ist. Ist dies nicht der Fall, so wird in an sich bekannter Weise der bereitgestellte und überprüfte Befehl ausgeführt, sowie anschließend der nächste Befehl aufgerufen usw., bis schließlich der letzte Befehl des Programms den Prozeßablauf in der bereits beschriebenen Weise beendet.

Wird dagegen ein, einen Arbeitsaufruf für einen anderen Prozeß veranlassender Befehl XGOLxx erkannt, dann wird gemäß der vorliegenden Erfindung ein Unterprogramm zur Eintragung des ARbeitsaufrufes in die zugehörige Warteschlange aufgerufen. Dieser Ablauf ist im mittleren und unteren Teil von FIG 5 dargestellt.

Um zu verhindern, daß infolge zwischenzeitlich auftretender Unterbrechungsanforderungen der Arbeitsaufruf nicht sicher abgesetzt werden kann, wird das Unterprogramm durch Setzen einer Sperre gegen mögliche Unterbrechungen gesichert. Danach wird aus dem XGOLxx-Befehl die Priorität PRIO_{PROZ} des aufzurufenden Prozesses ermittelt und in Verbindung mit der Priorität PRIO_{ABS} und gegebenenfalls unter Berücksichtigung der Priorität PRIO_{ZIEL} entsprechend FIG 3 die Adresse WS-AD der zuständigen Warteschlange gebildet.

Die so bestimmte Warteschlange wird dann überprüft, ob noch ein zur Zwischenspeicherung des Arbeitsaufrufes dienendes Warteschlangenelement vorhanden ist. Fällt diese Prüfung positiv aus, wird der Arbeitsaufruf in die Warteschlange eingegliedert und als Unterbrechungsereignis iₚₓ in der Einrichtung IDEC angezeigt. Das Unterprogramm zur Behandlung von Warteschlangeneinträgen ist damit beendet, so daß die Sperre wieder aufgehoben und in das unterbrochene Programm zurückgekehrt werden kann.

Ist kein freies Warteschlangenelement in der angesteuerten Warteschlange vorhanden, so wird normalerweise ein entsprechender Fehlercode gesetzt und der Prozeßablauf abgebrochen, was in FIG 5 gestrichelt im linken unteren Teil angedeutet ist. Im vorliegenden Fall aber sei unterstellt, daß das System über die Möglichkeiten einer Erweiterung der Warteschlangen durch weitere Warteschlangenelemente verfügt, so daß zunächst, z.B. im Rahmen eines weiteren Unterprogrammes, die belegte Warteschlange um ein weiteres Warteschlangenelement ergänzt wird, in das dann der Arbeitsaufruf in der beschriebenen Weise eingetragen werden kann.

Die Eintragung von Arbeitsaufrufen in die jeweilige Warteschlange und die Anzeige dieses Ereignisses als Unterbrechungsanforderung erfolgt also jeweils unter der Aufsicht des veranlassenden Prozesses ohne die bei vielen bekannten Betriebssystemen notwendige Umschaltung auf ein zentrales Betriebsprogramm. Der entsprechende Unterprogrammlauf ist dabei frei von irgendwelchen prioritätsbedingten Ordnungsaufgaben bei der Einreihung eines Arbeitsaufrufes in die jeweilige Warteschlange, da für jede Prioritätsstufung eine eigene Warteschlange vorgesehen ist, deren direkte Auswahl anhand des vorgegebenen Adressenschemas möglich ist, und alle Warteschlangen nach dem FIFO-Prinzip arbeiten, also alle Arbeitsaufrufe in der eingetragenen Reihenfolge wieder ausgetragen werden.

Abgesehen von der gegebenenfalls notwendig werdenden Erweiterung einer Warteschlange ist die Dauer des Eintragungsvorganges für alle Arbeitsaufrufe gleich, damit eine bei der Auslegung der Datenverarbeitungsanlage für den jeweiligen Anwendungsfall genau kalkulierbare Größe. Auch sind die Warteschlangen für die Arbeitsaufrufe allein den Prozeßebenen zugeordnet und nicht, wie üblich, den Prozessen selbst, so daß bei der Eintragung alle prozessinternen Steuerungszustände unberücksichtigt bleiben können.

Wie bereits erwähnt, erfolgt eine Umsteuerung auf die Betriebsprogramme zur Behandlung von Prozeßaufrufen und Unterbrechungsanforderungen nur bei Vorliegen der Signale RLC und INT. Wird eine Unterbrechungsanforderung durch die Einrichtung IDEC von FIG 1 mit dem Signal INT zur Behandlung freigegeben, so wird demzufolge auf das Betriebsprogramm BP umgesteuert, wobei ein gegebenenfalls gerade laufender Prozeß unterbrochen wird. Dann wird gemäß FIG 6 zunächst geprüft, um welche Art Unterbrechung es sich handelt, sowie die durch die Unterbrechung betroffene Prozeßebene ermittelt und ein Hinweis auf die Prozeßebene des unterbrochenen Prozesses abgespeichert. Bei einer nicht programmbedingten Unterbrechung wird anschließend anhand des dem Anforderungssignal zugeordneten Adressenzeigers der angeforderte Prozeß unmittelbar aufgerufen und die Anzeige des zugehörigen Ereignisses i_{hy} zurückgesetzt. Außerdem wird die Prioritätsmaske in der Einrichtung IDEC auf die Prozeßebene des neuen Prozesses eingestellt und dieser durch Abgabe der Steuerung gestartet. Dieser Ablauf ist im linken oberen Teil von FIG 6 dargestellt.

Bei einer programmbedingten Unterbrechung wird dagegen zunächst die Gruppenanzeige iₚₓ in der Einrichtung IDEC gelöscht und eine Sperre gesetzt, damit die nachfolgend einzuleitende Überprüfung des zugehörigen Warteschlangensystems nicht durch eine andere Unterbrechung beeinträchtigt werden kann. Danach wird die erste Warteschlange mit der höchsten Prioritätseinstufung auf das Vorliegen eines Arbeitsaufrufes überprüft. Ist sie leer und handelt es sich nicht um die letzte Warteschlange des Warteschlangesystems, wird auf die Warteschlange mit der nächstniedrigeren Prioritätseinstufung umgeschaltet und für diese die Prüfung wiederholt usw., bis ein Arbeitsaufruf in einer der Warteschlangen gefunden wird. Der gefundene Arbeitsaufruf wird aus der Warteschlange ausgetragen. Gleichzeitig wird in der Einrichtung IDEC die Anzeige des zugehörigen Ereignisses iₚₓ wieder gesetzt und die Prioritätsmaske auf die mitgeteilte Priorität PRIOM der zugehörigen Prozeßebene eingestellt. Danach wird der angeforderte Prozeß aufgerufen und geprüft, ob er noch existent ist. Ist dies der Fall, wird die gesetzte Sperre wieder aufgehoben und der neue Prozeß gestartet. Andernfalls wird der Arbeitsaufruf für den nicht existenten Prozeß übergangen und gegebenenfalls eine Meldung für den Supervisor SVC abgesetzt.

Der Fortgang des Steuerungsablaufes ist dann derselbe, als wenn bei der Überprüfung des Warteschlangensystems die letzte Warteschlange überprüft und kein Arbeitsaufruf in dieser gefunden wird. Die Überprüfung des Warteschlangensystems ist damit abgeschlossen, so daß die gesetzte Sperre gegen Unterbrechung wieder aufgehoben werden kann.

Damit hat das steuernde Betriebsprogramm BP einen Ablaufzustand erreicht, der die Übergabe der Steuerung an einen anderen Prozeß erlaubt. Der Anstoß hierzu kann in üblicher Weise durch eine von einem laufenden Prozeß ausgelöste Meldung RLC, gleichgültig ob dieser Prozeß durch eine programmbedingte Unterbrechungsanforderung ausgelöst worden war oder nicht, sowie durch die nach Austragung eines Arbeitsaufrufes aus einer Warteschlange infolge des erneuten Setzens der Anzeige iₚₓ erzwungene Überprüfung des Warteschlangensystems mit Erreichen der letzten Warteschlange ohne Auffinden eines weiteren Arbeitsaufrufes oder durch Meldung an den Supervisor SVC verursacht werden. In jedem Falle wird die Prioritätsmaske in der Einrichtung IDEC auf die Priorität der Prozeßebene oberhalb der des zuletzt unterbrochenen Prozesses zurückgesetzt, so daß unabhängig von der Vorgeschichte des Prozeßlaufes noch vorliegende oder inzwischen eingetroffenen Unterbrechungsanforderungen höherer Priorität über das Signal INT erfaßt werden, bevor ein gegebenenfalls unterbrochener Prozeß wieder aufgerufen und fortgesetzt wird.

Bei einer vorher an den Supervisor SVC abgegebenen Meldung würde diese wegen der sehr hohen Priorität der zugehörigen Prozeßebene zum Tragen kommen. Bei einem aus einer Warteschlange ausgetragenen Arbeitsaufruf würde wegen der dabei erneut gesetzten Anzeige iₚₓ diese erneut zum Tragen kommen, auch wenn zwischenzeitlich eine vorrangigere Prozeßebene zu bedienen wäre, so daß mit Sicherheit alle durch dasselbe Ereignis iₚₓ angezeigten Arbeitsaufrufe des Warteschlangensystems erfaßt werden und erst durch das Nichtwiederaufleben der Anzeige iₚₓ aus dem Überprüfungsmechanismus des Warteschlangensystems ausgestiegen werden kann.

Nur wenn nach Herabsetzten der Prioritätsmaske zur Freigabe von angezeigten Unterbrechungsereignissen zur Behandlung das Signal INT ausbleibt, wird ein gegebenenfalls unterbrochener Prozeß in der nächst niedrigeren Prozeßebene wieder aufgerufen und fortgesetzt und damit über die Markierung E1 im linken unteren Teil von FIG 6 auf den Prozeßablauf von FIG 5 übergeleitet.

Das Heruntersetzen der Prioritätsmaske führt schließlich zur Freigabe der untersten Prozeßebene PZE7, in der beispielsweise die vorhandenen Anzeigen für Unterbrechungsereignisse durch Abtasten in zyklischer Folge auf das Vorliegen eines Unterbrechugnsereignisses überwacht werden, wenn keine Prozeßebene mit höherer Priorität zu bedienen ist. Diese zyklische Überprüfung auf dier untersten Prozeßebene kann gleichzeitig als Leerlauf des Systems behandelt werden, was eine zusätzliche Prozeßebene für den Leerlauf erübrigt.

## Patentansprüche

1. Verfahren zur Behandlung von Unterbrechungsanforderungen und Prozeßaufrufen in einem kombinierten Unterbrechungs- und Ablaufsteuersystem für wenigstens zum Teil im Echtzeitbetrieb arbeitende Datenverarbeitungsanlagen
- mit mehreren, nach Prioritäten gestaffelten Prozeßebenen, PZE0 bis PZE7), denen die aufrufbaren Prozesse entsprechend ihrer durch die einzuhaltenden Realzeitbedingungen vorgegebenen Priorität zugeordnet sind und denen in gleicher Weise nach Prioritäten unterteilte Unterbrechungsebenen für Arbeitsaufrufe an die Prozesse kennzeichnende Ereignisse, die system- oder programmbedingt sein können, entsprechen, wobei programmbedingte Arbeitsaufrufe in Warteschlangen (WS-ME, WS-SVC,...) eingereiht werden,
- mit Mitteln zur Überwachung und Bewertung der Prioritätseinstufung der, einen Arbeitsaufruf für einen der Prozesse kennzeichnenden Ereignisse und
- mit Mitteln (IDEC) zur Weiterleitung des Arbeitsaufrufes mit der jeweils höchsten Prioritätseinstufung an den zugehörigen Prozeß bei gegebenenfalls gleichzeitiger Unterbrechung eines früher durch einen Arbeitsaufruf niedrigerer Prioritätseinstufung ausgelösten laufenden Prozesses,
**dadurch gekennzeichnet,**
- daß zumindest für eine der Prozeßebenen (SYST1) mehrere nach dem FIFO-Prinzip arbeitende Warteschlangen vorhanden sind, so daß vom jeweils laufenden Prozeß ausgelöste programmbedingte Arbeitsaufrufe (WR) für einen der Prozesse dieser Prozeßebene (SYST1) von diesem laufenden Prozeß in eine dieser Warteschlangen eingereiht werden, wobei diese eine Warteschlange sich durch feste Zuordnung zur Prozeßebene (ZBH) des aufrufenden Prozesses ergibt,
- daß nach Eintragung des jeweiligen Arbeitsaufrufs (WR) in die zuständige Warteschlange (WS-ZBH) vom laufenden Prozeß außerdem ein das Vorliegen des Arbeitsaufrufes (WR) kennzeichnendes Ereignis (iₚₓ) angezeigt wird, bevor der laufende Prozeß sein Programm fortsetzt,
- daß das jeweils zuletzt angezeigte Ereignis (iₚₓ) unabhängig vom laufenden Prozeß unmittelbar hinsichtlich seiner Prioritätseinstufung mit der der anderen bereits angezeigten Ereignisse (z.B. i_{hy}) verglichen und bewertet wird und
- daß bei Feststellung einer zu einer Prozeßunterbrechung führenden Prioritätseinstufung die Prozeßunterbrechung veranlaßt wird (Signal INT).

2. Verfahren nach Anspruch 1, **dadurch gekennzeichnet,** daß Arbeitsaufrufen (WR) zusätzlich eine gesonderte Aufrufpriorität (z.B. 0 bis 7) zugeordnet wird, daß derartige Arbeitsaufrufe (WR) jeweils in eine der jeweiligen Aufrufpriorität (z.B. 5) zugeordnete und ebenfalls nach dem FIFO-Prinzip arbeitende Warteschlange (z.B. WS5) eingereiht werden, daß die verschiedenen Aufrufprioritäten (z.B. 0 bis 7) für Arbeitsaufrufe von Prozessen aus derselben Prozeßebene (z.B. PROC) zugeordneten Warteschlangen (z.B. WS0 bis WS7) anstelle der einzigen, in der Prozeßebene (z.B. SYST1) des aufzurufenden Prozesses der Prozeßebene (z.B. PROC) des aufrufenden Prozesses, zugeordneten Warteschlange (z.B. WS-PROC) vorgesehen werden und daß die einzelnen Warteschlangen (WS0 bis WS7) entsprechend ihrer Prioritätseinstufung (0 bis 7) bei der Weiterleitung von in ihnen zwischengespeicherten Arbeitsaufrufen (WR) berücksichtigt werden.

3. Verfahren nach Anspruch 1 oder 2 für Datenverarbeitungsanlagen mit nur einer einzigen Verarbeitungseinheit (CPU) als gemeinsames Betriebsmittel für die Ausführung der Prozesse aller Prozeßebenen (z.B. PZE0 bis PZE7), **dadurch gekennzeichnet,** daß die Mittel (IDEC) zur Überwachung und Bewertung der Prioritätseinstufung der einen Arbeitsaufruf (WR) für einen der Prozesse kennzeichnenden Ereignisse (iₓₓ) jeweils alle angezeigten Ereignisse unabhängig von der zugehörigen Unterbrechungsebene (PZE0 bis PZE7) überwachen und bewerten und daß lediglich bei einer auf eine Prozeßebene (z.B. PZE4) mit höherer Priorität weisenden Prioritätseinstufung des zuletzt genannten Ereignisses durch Freigabe dieses Ereignisses zur Behandlung (Meldung INT) die Unterbrechung des laufenden Prozesses veranlaßt wird.

4. Verfahren nach Anspruch 1 oder 2 für Datenverarbeitungsanlagen, bei denen für jede Prozeßebene (z.B. PZE0 bzw. PZE1 bzw. ... bzw. PZE7) jeweils eine eigene Verarbeitungseinheit als gemeinsames Betriebsmittel für die Ausführung nur der Prozesse der zugehörigen Prozeßebene vorgesehen ist, **dadurch gekennzeichnet,** daß die Mittel zur Überwachung und Bewertung der Prioritätseinstufung der einen Arbeitsaufruf für einen der Prozesse kennzeichnenden Ereignisse die innerhalb jeder Unterbrechungsebene angezeigten Ereignisse jeweils unabhängig von den in den übrigen Unterbrechungsebenen überwachen und bewerten, daß innerhalb jeder Unterbrechungsebene das jeweils zuletzt angezeigte Ereignis unmittelbar hinsichtlich seiner Prioritätseinstufung mit der der anderen bereits angezeigten Ereignisse verglichen und bewertet wird, und daß abhängig von der für die innerhalb der jeweiligen Prozeßebene geltenden Prioritätseinstufung lediglich bei einer in eine höhere Prioritätsstufe weisenden höheren Prioritätseinstufung des zuletzt angezeigten Ereignisses durch Freigabe dieses Ereignisses zur Behandlung (Meldung INT) die Unterbrechung des gerade in dieser Prozeßebene laufenden Prozesses veranlaßt wird.

5. Verfahren nach einem der Ansprüche 1 bis 4, **dadurch gekennzeichnet,**
- daß programmbedingte Arbeitsaufrufe (WR) kennzeichnende Ereignisse (iₚₓ) innerhalb jeder Unterbrechungs- und Prozeßebene (z.B. PZE4) als ein einheitliches Ereignis (z.B. iₚ₄) mit vorgegebener Prioritätsstufe innerhalb der zugehörigen Prozeßebene (PZE4) angezeigt werden, daß nach einer Freigabe eines solchen angezeigten Ereignisses (iₚ₄) zur Behandlung (Meldung INT) die zugehörige Anzeige zunächst gelöscht und die Überprüfung der zugehörigen Warteschlangen (z.B. WS-SYST4) zur Ermittlung eines zwischengespeicherten Arbeitsaufrufes (WR) eingeleitet wird und
- daß nach Ermittlung eines zwischengespeicherten Arbeitsaufrufes (WR) und dessen Ausgliederung aus der zugehörigen Warteschlange die gelöschte Anzeige des auslösenden Ereignisses (iₚ₄) vor Aufruf des zugehörigen Prozesses erneut bewirkt wird und
- daß gleichzeitig die Freigabe von angezeigten Ereignissen zur Behandlung für alle Unterbrechungsebenen bzw. Prioritätsstufen mit niedrigerer Priorität einschließlich der betroffenen Unterbrechungsebene bzw. Prioritätsstufe für den aufzurufenden Prozeß gesperrt wird.

6. Verfahren nach Anspruch 5, **dadurch gekennzeichnet,**
- daß bei Freigabe eines angezeigten Ereignisses (z.B. iₚ₄) für programmbedingte Arbeitsaufrufe (WR) zur Behandlung (Meldung INT) die Warteschlangen (z.B. WS-ME bis WS-U.BAT) in der zugehörigen Prozeßebene (z.B. SYST1) bzw. Prioritätsstufe entsprechend ihrer Prioritätsstaffelung nacheinander überprüft werden, bis ein zwischengespeicherter Arbeitsaufruf (WR) ermittelt wird, der dann aufgerufen wird, und
- daß nach Beendigung des aufgerufenen Prozesses (Meldung RLC) die Sperrung der Freigabe von angezeigten Ereignissen (iₓₓ) zur Behandlung jeweils für alle Prozeßebenen bzw. Prioritätsstufen aufgehoben wird, die oberhalb der Prozeßebene bzw. Prioritätsstufe liegen, der der zuletzt unterbrochene Prozeß zugeordnet ist, so daß infolge des Weiterbestehens der Anzeige (iₚₓ) für einen programmbedingten Arbeitsaufruf das angezeigte Ereignis (iₚₓ) erneut zur Behandlung freigegeben und die Warteschlangen erneut überprüft werden, bis schließlich keine in ihnen zwischengespeicherter Arbeitsaufruf mehr vorliegt und die zugehörige Anzeige gelöscht bleibt.

7. Verfahren nach einem der Ansprüche 1 bis 6, **dadurch gekennzeichnet,**
- daß abgesehen von durch Ereignisse mit höherer Prioritätseinstufung als der laufende Prozeß herbeigeführten Prozeßläufen zwischengespeicherte Arbeitsaufrufe (WR) aus den Warteschlangen nur ausgetragen werden und der zugehörige Prozeß aufgerufen wird, wenn der vorhergehend aufgerufene Prozeß seinen Laufzustand beendet und die Verarbeitungseinheit wieder freigegeben hat (Meldung RLC),
- daß notwendige Rückmeldung im Rahmen der Erledigung eines Arbeitsaufrufes durch einen aufgerufenen Prozeß an den den Arbeitsaufruf veranlassenden Prozeß ebenfalls in Form eines Arbeitsaufrufes durch den aufgerufenen Prozeß erfolgen,
- daß jeder aus den Warteschlangen ausgetragene Arbeitsaufruf (WR) bedingungslos an den zugehörigen Prozeß übergeben wird, als wäre dieser abläuffähig,
- daß solch ein übergebener Arbeitsaufruf in eine prozeßinterne Warteschlange eingetragen wird, wenn der mit einem vorhergehenden Arbeitsaufruf für denselben Prozeß verbundene Auftrag bisher nicht ausgeführt werden konnte und deshalb die Verarbeitungseinheit (CPU) zwischenzeitlich für andere Prozesse freigegeben worden war, und
- daß bei einem nachfolgenden, die Ausführung der in der prozeßinternen Warteschlange zwischengespeicherten Arbeitsaufrufe ermöglichenden Arbeitsaufruf zunächst alle zwischengespeicherten Arbeitsaufrufe abgearbeitet werden, bevor die Verarbeitungseinheit (CPU) wieder freigegeben wird.

8. Verfahren nach einem der Ansprüche 1 bis 7, **dadurch gekennzeichnet,** daß die Freigabe von Arbeitsaufrufe kennzeichnenden Ereignissen (z.B. iₚₓ) zur Behandlung durch eine einstellbare Maske gesteuert wird, die bei Aufruf eines Prozesses jeweils auf die Priorität dieses Prozesses eingestellt wird, so daß der laufende Prozeß nur durch Ereignisse mit höherer Priorität unterbrochen werden kann und daß die Prioritätseinstellung der Maske jeweils nach Freigabe der Verarbeitungseinheit durch den jeweils laufenden Prozeß erniedrigt wird, so daß bisher gesperrte Ereignisse (iₓₓ) zur Behandlung freigegeben werden.

9. Verfahren nach einem der Ansprüche 1 bis 8, **dadurch gekennzeichnet,** daß bei Unterbrechung eines laufenden Prozesses infolge Freigabe eines Ereignisses mit höherer Prioritätseinstufung zur Behandlung die Identität des zuletzt unterbrochenen Prozesses dem neuen Prozeß mitgeteilt wird, daß bei Beendigung des neuen Prozesses zunächst anhand der vorliegenden Identität des zuletzt unterbrochenen Prozesses die Maske zur Steuerung der Freigabe von Ereignisses (iₓₓ) zur Behandlung bis auf die Prioritätseinstufung des zuletzt unterbrochenen Prozesses erniedrigt wird und daß bei einer daraufhin erfolgenden erneuten Freigabe für einen weiteren Prozeß höherer Prioritätseinstufung die Identität des zuletzt unterbrochenen Prozesses an diesen neuen Prozeß übergeben wird, während bei Ausbleiben einer erneuten Freigabe der zuletzt unterbrochene Prozeß anhand der vorliegenden Identität aufgerufen und fortgesetzt wird.

10. Verfahren nach einem der Ansprüche 1 bis 9, **dadurch gekennzeichnet,** daß bei auftretenden Prozeßunterbrechungen die eine Fortsetzung des unterbrochenen Prozesses ermöglichenden Daten in den Prozeßebenen bzw. Prioritätsstufen innerhalb der Prozeßebene individuell zugeordneten Speichern (z.B. Register REG0 bis REG7) gesichert werden.

11. Anordnung zur Behandlung von Unterbrechungsanforderungen und Prozeßaufrufen zur Durchführung des Verfahrens nach einem der Ansprüche 1 bis 10 in einem kombinierten Unterbrechungs- und Ablaufsteuersystem für wenigstens zum Teil im Echtzeitbetrieb arbeitende Datenverarbeitungsanlagen
- mit mehreren, nach Prioritäten gestaffelten Prozeßebenen, (PZE0 bis PZE7), denen die aufrufbaren Prozesse entsprechend ihrer durch die einzuhaltenden Realzeitbedingungen vorgegebenen Priorität zugeordnet sind und denen in gleicher Weise nach Prioritäten unterteilte Unterbrechungsebenen für, Arbeitsaufrufe an die Prozesse kennzeichnende Ereignisse, die system- oder programmbedingt sein können, entsprechen, wobei programmbedingte Arbeitsaufrufe in Warteschlangen (WS-ME, WS-SVC,...) eingereiht werden,
- mit Mitteln zur Überwachung und Bewertung der Prioritätseinstufung der, einen Arbeitsaufruf für einen der Prozesse kennzeichnenden Ereignisse und
- mit Mitteln (IDEC) zur Weiterleitung des Arbeitsaufrufes mit der jeweils höchsten Prioritätseinstufung an den zugehörigen Prozeß bei gegebenenfalls gleichzeitiger Unterbrechung eines früher durch einen Arbeitsaufruf niedrigerer Prioritätseinstufung ausgelösten laufenden Prozesses,
**gekennzeichnet durch** eine entsprechend den Prozeßebenen (PZE0 bis PZE7) gegliederte Warteschlangenanordnung (WS-SYST0 bis WS-SYST7), die wenigstens in einer der Prozeßebenen eine der Anzahl der Prozeßebenen entsprechende Anzahl von nach dem FIFO-Prinzip arbeitenden Warteschlangen aufweist, wobei jeweils eine dieser Warteschlangen individuell einer der Prozeßebenen zugeordnet und nur für die Eintragung von Arbeitsaufrufen (WR) von Prozessen aus der zugeordneten Prozeßebene vorgesehen ist und wobei jede dieser Warteschlangen unmittelbar durch die Kombination aus der Priorität (PRIO_{PROZ}) des aufzurufenden Prozesses und der Priorität (PRIO_{ABS}) des aufrufenden Prozesses adressierbar ist, und ferner gekennzeichnet durch Mittel zur Überprüfung der einzelnen Warteschlangen einer Prozeßebene in Richtung fallender Prioritätsstufung auf ihre Belegung mit Arbeitsaufrufen (WR).

12. Anordnung nach Anspruch 11, **gekennzeichnet durch** mehrere, einer einzigen Prozeßebene individuell zugeordnete Warteschlangen (z.B. WS0 bis WS7) innerhalb einer Prozeßebene, wobei diese Warteschlangen unterschiedlichen Prioritätsstufen (z.B. 0 bis 7) zugeordnet sind und durch den Arbeitsaufrufen (WR) zugeordnete Aufrufprioritäten (PRIO_{ZIEL}) auswählbar sind.

## Claims

1. Method for handling interrupt requests and process calls in a combined interrupt and sequence control system for data processing systems working at least partially in real-time mode
- having a plurality of process levels (PZE0 to PZE7) graded according to priorities to which the callable processes are assigned in accordance with their priority predetermined by the real-time conditions to be fulfilled, and to which correspond events, which may be system-related or program-related, that signify interrupt levels, divided according to priorities in the same way, for job calls to the processes program-related job calls being entered in queues (WS-ME, WS-SVC, ...),
- having means for monitoring and evaluating the priority level of the events signifying a job call for one of the processes, and
- having means (IDEC) for forwarding the job call having the highest priority level in each case to the associated process, if necessary with simultaneous interruption of a current process initiated earlier by a job call having a lower priority level,
characterised
- in that a plurality of queues operating according to the FIFO principle are available at least for one of the process levels (SYST1), so that program-related job calls (WR) initiated by the respective current process for one of the processes of said process level (SYST1) are entered in one of said queues by said current process, said one queue being obtained by fixed assignment to the process level (ZBH) of the calling process,
- in that, after the current process has entered the respective job call (WR) in the appropriate queue (WS-ZBH), in addition an event (iₚₓ) signifying the presence of the job call (WR) is indicated before the current process continues its program,
- in that, independently of the current process, the last event (iₚₓ) indicated in each case is immediately compared with respect to its priority level to that of the other already indicated events (for example i_{hy}) and is evaluated, and
- in that if a priority level leading to a process interrupt is detected, the process interrupt is initiated (signal INT).

2. Method according to Claim 1, characterised in that a separate call priority (for example 0 to 7) is additionally assigned to job calls (WR), in that such job calls (WR) are entered in each case in a queue (for example WS5) which is assigned to the respective call priority (for example 5) and likewise operates according to the FIFO principle, in that the queues (for example WS0 to WS7) assigned to different call priorities (for example 0 to 7) for job calls of processes from the same process level (for example PROC) are provided instead of the single queue (for example WS-PROC) assigned to the process level (for example PROC) of the calling process in the process level (for example SYST1) of the calling process, and in that the individual queues (WS0 to WS7) are handled in accordance with their priority level (0 to 7) during the forwarding of job calls (WR) temporarily stored in them.

3. Method according to Claim 1 or 2 for data processing systems having only a single processing unit (CPU) as a common resource for the execution of the processes of all process levels (for example PZE0 to PZE7), characterised in that the means (IDEC) for monitoring and evaluating the priority level of the one job call (WR) for events (iₓₓ) signifying one of the processes in each case monitor and evaluate all events indicated regardless of the associated interrupt level (PZE0 to PZE7), and in that only in the case of a priority level of the last aforesaid event indicating a process level (for example PZE4) having a higher priority is the interruption of the current process initiated by releasing said event for handling (message INT).

4. Method according to Claim 1 or 2 for data processing systems in which each process level (for example PZE0 or PZE1 or ... or PZE7) is provided in each case with its own processing unit as a common resource for the execution only of the processes of the associated process level, characterised in that the means for monitoring and evaluating the priority level of the events signifying a job call for one of the processes monitor and evaluate the events indicated within each interrupt level regardless of those in the other interrupt levels in each case, in that within each interrupt level the last event indicated in each case is immediately compared with respect to its priority level to that of the other already indicated events and is evaluated, and in that, depending on the priority level applicable to the one within the respective process level, only in the case of a higher priority level of the last event indicated indicating a higher priority level is the interruption of the process currently running in said process level initiated by releasing said event for handling (message INT).

5. Method according to one of Claims 1 to 4, characterised
- in that events (iₚₓ) signifying program-related job calls (WR) within each interrupt and process level (for example PZE4) are indicated as a uniform event (for example iₚ₄) with predetermined priority level within the associated process level (PZE4), in that after such an indicated event (iₚ₄) has been released for handling (message INT), the associated indicator is first cleared and the checking of the associated queues (for example WS-SYST4) to determine any temporarily stored job call (WR) is initiated, and
- in that after determination of a temporarily stored job call (WR) and its removal from the associated queue, the cleared indicator of the initiating event (iₚ₄) is activated again before the associated process is called, and
- in that, at the same time, the release of indicated events for handling for all interrupt levels or priority levels having a lower priority, including the affected interrupt level or priority level for the process to be called, is blocked.

6. Method according to Claim 5, characterised
- in that upon the release of an indicated event (for example iₚ₄) for program-related job calls (WR) for handling (message INT), the queues (for example WS-ME to WS-U.BAT) in the associated process level (for example SYST1), or priority level respectively, are successively checked in accordance with their priority grading until a temporarily stored job call (WR) is determined, which is then called, and
- in that after termination of the called process (message RLC), the blocking of the release of indicated events (iₓₓ) for handling is cancelled in each case for all process levels and priority levels which are above the process level or priority level assigned to the last process interrupted, so that, as a result of the maintenance of the indicator (iₚₓ) for a program-related job call, the indicated event (iₚₓ) is released for handling once more, and the queues are checked once more until finally there are no more job calls temporarily stored therein and the associated indicator remains cleared.

7. Method according to one of Claims 1 to 6, characterised
- in that, apart from process runs caused by events having a higher priority level than the current process, temporarily stored job calls (WR) are only removed from the queues and the associated process called if the previously called process has terminated its running status and has released the processing unit again (message RLC),
- in that necessary acknowledgement in the course of the execution of a job call by a called process is made by the called process to the process initiating the job call likewise in the form of a job call,
- in that each job call (WR) removed from the queues is transferred without conditions to the associated process as if the latter were executable,
- in that such a transferred job call is entered in a process-internal queue if it was not hitherto possible to execute the task associated with a preceding job call for the same process and as a result the processing unit (CPU) had been released for other processes in the meantime, and
- in that, in the case of a subsequent job call enabling the execution of the job calls temporarily stored in the process-internal queue, all temporarily stored job calls are first processed before the processing unit (CPU) is released again.

8. Method according to one of Claims 1 to 7, characterised in that the release of events (for example iₚₓ) signifying work calls for handling is controlled by an adjustable mask which is set to the priority of a process when said process is called in each case, so that the current process can only be interrupted by events having a higher priority, and in that the priority setting of the mask is decreased in each case after the processing unit has been released by the respective current process, so that previously locked events (iₓₓ) are released for handling.

9. Method according to one of Claims 1 to 8, characterised in that if a current process is interrupted, as a result of an event having a higher priority level being released for handling, the new process is notified of the identity of the last process interrupted, in that upon termination of the new process, firstly the mask for controlling the release of events (iₓₓ) for handling is decreased on the basis of the present identity of the last process interrupted to the priority level of the last process interrupted, and in that, in the case of a subsequently performed renewed release for a further process having a higher priority level, the identity of the last process interrupted is transferred to said new process, while if a renewed release is not forthcoming, the last process interrupted is called up on the basis of the present identity and is continued.

10. Method according to one of Claims 1 to 9, characterised in that, in the case of process interrupts occurring, the data permitting a continuation of the interrupted process in the process levels or priority levels are saved within the memories (for example registers REG0 to REG7) individually assigned to the process level.

11. Arrangement for handling interrupt requests and process calls for carrying out the method according to one of Claims 1 to 10, in a combined interrupt and sequence control system for data processing systems working at least partially in real-time mode,
- having a plurality of process levels (PZE0 to PZE7) graded according to priorities to which the callable processes are assigned in accordance with their priority predetermined by the real-time conditions to be fulfilled, and to which correspond events, which may be system-related or program-related, that signify interrupt levels, divided according to priorities in the same way, for job calls to the processes programrelated job calls being entered in queues (WS-ME, WS-SVC, ...),
- having means for monitoring and evaluating the priority level of the events signifying a job call for one of the processes, and
- having means (IDEC) for forwarding the job call having the highest priority level in each case to the associated process, if necessary with simultaneous interruption of a current process initiated earlier by a job call having a lower priority level,
characterised by a queue arrangement (WS-SYST0 to WS-SYST7) structured in accordance with the process levels (PZE0 to PZE7) which has at least in one of the process levels a number of queues operating according to the FIFO principle corresponding to the number of process levels, in which in each case one of said queues is individually assigned to one of the process levels and is provided only for the entry of job calls (WR) of processes from the associated process level, and in which each of said queues can be addressed directly by the combination of the priority (PRIO_{PROZ}) of the process to be called and the priority (PRIO_{ABS}) of the calling process, and which is furthermore characterised by means for checking the individual queues of a process level in the direction of decreasing priority level for their occupation by job calls (WR).

12. Arrangement according to Claim 11, characterised by a plurality of queues (for example WS0 to WS7) individually assigned to a single process level within one process level, in which said queues are assigned to different priority levels (for example 0 to 7) and can be selected by call priorities (PRIO_{ZIEL}) assigned to the job calls (WR).

## Revendications

1. Procédé pour traiter des demandes d'interruption et des appels de processus dans un système combiné de commande d'interruption et de commande d'exécution pour des installations de traitement de données qui travaillent au moins en partie en temps réel, comportant
- plusieurs plans de processus (PZE0 à PZE7) échelonnés suivant des priorités, auxquels les processus pouvant être appelés sont associés en fonction de leur priorité prédéterminée par les conditions en temps réel devant être respectées et auxquels correspondent de la même manière, des plans d'interruption subdivisés en fonction de priorités et prévus pour des appels de travail aux évènements caractérisant les processus et qui peuvent être conditionnés par le système ou par un programme, des appels de travail conditionnés par un programme étant rangés dans des files d'attente (WS-ME, WS-SVC, ...),
- des moyens pour contrôler et évaluer le classement des priorités des évènements caractérisant l'appel de travail pour l'un des processus, et
- des moyens (IDEC) pour retransmettre l'appel de travail comportant le classement de priorité la plus forte, au processus associé, lors d'une interruption éventuellement simultanée d'un processus en cours, déclenché antérieurement par un appel de travail ayant un classement de priorité plus faible,
caractérisé par le fait
- que, pour l'un des plans de processus (SYST1), il est prévu au moins plusieurs files d'attente travaillant suivant le principe FIFO, de sorte que des appels de travail (WR), conditionnés par le programme, déclenchés par le processus en cours et pour l'un des processus de ce plan de processus (SYST1), sont rangés dans l'une de ces files d'attente, cette file d'attente étant obtenue par l'association fixe au plan de processus (ZBH) du processus appelant,
- qu'en outre, après l'introduction de l'appel de travail respectif (WR) dans la file d'attente concernée (WS-ZBH) par le processus en cours, un évènement (iₚₓ) caractérisant la présence de l'appel de travail (WR) est affiché avant que le processus en cours poursuive son programme,
- que le classement de priorité de l'évènement (iₚₓ) affiché en dernier est comparé directement, indépendamment du processus en cours, à l'échelon de priorité de l'autre évènement (par exemple i_{hy}) déjà affiché, et est évalué, et
- que, lorsque l'on constate un classement de priorité entraînant une interruption du processus, cette interruption est déclenchée (signal INT).

2. Procédé suivant la revendication 1, caractérisé par le fait qu'en outre une priorité séparée d'appel (par exemple 0 à 7) est associée à des appels de travail (WR), que de tels appels de travail (WR) sont rangés dans une file d'attente (par exemple WS5) qui est associée à la priorité d'appel respective (par exemple 5) et qui travaille également selon le principe FIFO, que les files d'attente (par exemple WS0 à WS7), qui sont associées à différentes priorités d'appel (par exemple 0 à 7) pour des appels de travail de processus du même plan de processus (par exemple PROC), sont prévues à la place de l'unique file d'attente (par exemple WS-PROC) associée, dans le plan de processus (par exemple SYST1) du processus qui doit être appelé et qui fait partie du plan de processus (par exemple PROC), et que les différentes files d'attente (WS0 à WS7) sont prises en compte, en fonction de leur classement de priorité (0 à 7), lors de la retransmission d'appels de travail (WR) mémorisés temporairement dans ces files.

3. Procédé suivant la revendication 1 ou 2 pour des installations de traitement de données ne comportant qu'une seule unité de traitement (CPU) comme moyen commun de traitement pour l'exécution des processus de tous les plans de processus (par exemple PZE0 à PZE7), caractérisé par le fait que les moyens (IDEC) destinés à contrôler et à évaluer le classement de priorité d'un appel de travail (WR) pour l'un des évènements (iₓₓ) caractérisant les processus, contrôlent et évaluent tous les évènements affichés, indépendamment du plan associé d'interruption (PZE0 à PZE7), et que le contrôle du processus en cours est déclenché seulement lors d'un classement de priorité, qui désigne un plan de processus (par exemple PZA4) de priorité supérieure, de l'évènement indiqué en dernier lieu, par libération de cet évènement pour le traitement (signalisation INT).

4. Procédé suivant la revendication 1 ou 2 pour des installations de traitement de données, dans lesquelles pour chaque plan de processus (par exemple PZE0 ou PZE1 ou ... ou PZE7), il est prévu une unité propre de traitement comme moyens communs d'exploitation pour n'excécuter que des processus du plan de processus associé, caractérisé par le fait que les moyens destinés à contrôler et à évaluer le classement de priorité d'un appel de travail pour des évènements caractérisant l'un des processus, contrôlent et évaluent les évènements affichés dans chaque plan d'interruption, et ce respectivement indépendamment des évènements affichés dans les autres plans d'interruptions, que dans chaque plan d'interruptions, le classement de priorité de l'événement affiché en dernier lieu est comparé directement au classement de priorité des autres évènements déjà affichés et est évalué et qu'en fonction du classement de priorité valable pour les processus situés dans le plan de processus respectif, l'interruption du processus précisément en cours dans ce plan de processus est déclenchée, seulement lors d'un classement supérieur de priorité, indiquant un échelon de priorité supérieur, de l'évènement affiché en dernier lieu, par libération de cet évènement pour le traitement (signalisation INT).

5. Procédé suivant l'une des revendications 1 à 4, caractérisé par le fait
- que des évènements (iₚₓ), caractérisant des appels de travail (WR) conditionnés par le programme, sont affichés, dans chaque plan d'interruptions et de processus (par exemple PZE4), sous la forme d'un évènement uniforme (par exemple iₚ₄) à échelon de priorité prédéterminé à l'intérieur du plan de processus (PZE4) associé, qu'après une libération d'un tel événement (iₚ₄) affiché pour le traitement (signalisation INT), l'affichage associé est tout d'abord effacé et le contrôle des files d'attente associées (par exemple WS-SYST4) est déclenché pour déterminer l'appel de travail (WR) mémorisé temporairement, et
- qu'après avoir déterminé un appel de travail (WR) mémorisé temporairement et l'avoir séparé la file d'attente associée, l'affichage effacé de l'évènement (iₚ₄) exécutant le déclenchement, est à nouveau effectué avant l'appel du processus associé, et
- que simultanément la libération d'évènements affichés pour le traitement de tous les plans d'interruption ou de tous les échelons de priorité inférieure y compris le plan d'interruptions concerné ou l'échelon de priorité concerné, est bloquée pour le processus devant être appelé.

6. Procédé suivant la revendication 5, caractérisé par le fait
- que, lors de la libération de l'évènement affiché (par exemple iₚ₄) pour des appels de travail (WR) conditionnés par le programme en vue du traitement (signalisation INT), les files d'attente (par exemple WS-ME à WS-U.BAT), dans le plan de processus associé (par exemple SYST1) ou à l'échelon de priorité associé, sont successivement contrôlées conformément à leur échelonnement de priorité, jusqu'à ce que soit déterminé un appel de travail qui est (WR) mémorisé temporairement et qui est alors appelé, et
- qu'après la fin du processus appelé (signalisation RLC), le blocage de la libération d'événements affichés (iₓₓ) pour le traitement, est supprimé pour tous les plans de processus ou tous les échelons de priorité, qui sont situés au-dessus du plan de processus ou de l'échelon de priorité, qui est associé au processus interrompu en dernier lieu, de sorte que, étant donné que l'affichage (iₚₓ) existant à nouveau pour un appel de travail conditionné par le programme, l'événement affiché (iₚₓ) est à nouveau libéré pour le traitement et les files d'attente sont à nouveau contrôlées, jusqu'à ce qu'il n'existe finalement plus aucun appel de travail mémorisé temporairement dans ces files d'attente, et que l'affichage associé reste effacé.

7. Procédé suivant l'une des revendications 1 à 6, caractérisé par le fait
- que, indépendamment de déroulements de processus, qui sont exécutés par des évènements ayant un classement de priorité supérieur au processus en cours, des appels de travail (WR) mémorisés temporairement ne sont extraits des files d'attente et le processus associé n'est appelé que lorsque le processus précédemment appelé s'est arrêté et a à nouveau libéré l'unité de traitement (signalisation RLC),
- qu'une signalisation en retour nécessaire dans le cadre de l'établissement, par l'intermédiaire d'un processus appelé, d'un appel de travail au niveau du processus déclenchant l'appel de travail, s'effectue également sous la forme d'un appel de travail formulé par le processus appelé,
- que chaque appel de travail (WR), extrait des files d'attente, est transféré sans condition au processus associé, comme si ce dernier était apte à être exécuté,
- qu'un tel appel de travail transféré est introduit dans une file d'attente interne au processus lorsque l'ordre, qui est associé à un appel de travail précédent pour le même processus, n'a pas pu être exécuté jusqu'alors et que, par conséquent, l'unité de traitement (CPU) a été libérée, entre-temps, pour d'autres processus, et
- que, lors d'un appel de travail extérieur permettant l'exécution des appels de travail mémorisés temporairement dans la file d'attente interne au processus, tout d'abord tous les appels de travail mémorisés temporairement sont traités avant que l'unité de traitement CPU soit à nouveau libérée.

8. Procédé suivant l'une des revendications 1 à 7, caractérisé par le fait que la libération d'évènements (par exemple iₚₓ) caractérisant des appels de travail pour le traitement, est commandée au moyen d'un masque réglable, qui, lors de l'appel d'un processus, est réglé sur la priorité de ce processus, de sorte que le processus en cours ne peut être interrompu que par des évènements de priorité supérieure, et que le réglage de la priorité du masque est abaissé après la libération de l'unité de traitement, par le processus en cours de sorte que des évènements (iₓₓ) bloqués jusqu'alors sont libérés pour leur traitement.

9. Procédé suivant l'une des revendications 1 à 8, caractérisé par le fait que, lors de l'interruption d'un processus en cours, en raison de la libération d'un évènement ayant un classement de priorité supérieur, l'identité du processus interrompu en dernier lieu est communiquée, pour le traitement, au nouveau processus, qu'à la fin du nouveau processus, le masque pour la commande de la libération d'un évènement (iₓₓ) pour son traitement, est abaissé, tout d'abord sur la base de l'identité présente du processus interrompu en dernier lieu, jusqu'au classement de priorité du processus interrompu en dernier lieu, et que dans le cas d'une nouvelle libération, alors exécutée, pour un autre processus ayant un classement de priorité supérieur, l'identité du processus interrompu en dernier lieu est transférée à ce nouveau processus, tandis que dans le cas de l'absence d'une nouvelle libération, le processus interrompu en dernier lieu est appelé et poursuivi sur la base de l'identité présente.

10. Procédé suivant l'une des revendications 1 à 9, caractérisé par le fait que, dans le cas d'interruptions de processus apparaissant, les données, qui permettent une poursuite du processus interrompu, sont protégées dans les mémoires (par exemple registres REG0 à REG7) associées individuellement aux plans de processus ou aux échelons de priorité à l'intérieur du plan de processus.

11. Dispositif pour traiter des demandes d'interruption et des appels de processus, pour la mise en oeuvre du procédé suivant l'une des revendications 1 à 10, dans un système combiné de commande d'interruption et d'exécution pour des installations de traitement de données qui travaillent au moins en partie en temps réel, comportant
- plusieurs plans de processus (PZE0 à PZE7), dont les priorités sont échelonnées et auxquels les processus pouvant être appelés sont associés en fonction de leur priorité prédéterminée par les conditions en temps réel à respecter et auxquels correspondent, de la même manière, des plans d'interruption subdivisés en fonction de priorités et prévus pour des appels de travail aux évènements qui caractérisent les processus et qui peuvent être conditionnés par le système ou par un programme, des appels de travail conditionnés par un programme étant rangés dans des files d'attente (WS-ME, WS-SVC, ...),
- des moyens destinés à contrôler et à évaluer le classement des priorités des évènements caractérisant l'appel de travail pour l'un des processus, et
- des moyens (IDEC) destinés à retransmettre l'appel de travail avec le classement de priorité maximum, au processus associé, lors d'une interruption éventuellement simultanée d'un processus en cours déclenché antérieurement par un appel de travail ayant un classement de priorité inférieur,
caractérisé par un dispositif à files d'attente (WS-SYST0 à WS-SYST7), qui est subdivisé en fonction des plans de processus (PZE0 à PZE7) et qui comporte, au moins dans l'un des plans de processus, un nombre de files d'attente travaillant selon le principe FIFO, qui correspond au nombre des plans de processus, l'une de ces files d'attente étant associée individuellement à l'un des plans de processus et étant prévue uniquement pour l'introduction d'appels de travail (WR) de processus faisant partie du plan de processus associé, tandis que chacune de ces files d'attente peut être adressée directement par la combinaison formée de la priorité (PRIO_{PROZ}) du processus devant être appelé et de la priorité (PRIO_{ABS}) du processus appelant, et en outre caractérisé par des moyens destinés à contrôler les différentes files d'attente d'un plan de processus dans le sens de diminution de l'échelon de priorité, lors de leur occupation par des appels de travail (WR).

12. Dispositif suivant la revendication 11, caractérisé par plusieurs files d'attente (par exemple WS0 à WS7) associées individuellement à un seul plan de processus, à l'intérieur d'un plan de processus, ces files d'attente étant associées à différents échelons de priorité (par exemple 0 à 7) et pouvant être sélectionnées au moyen de priorités d'appel (PRIO_{ZIEL}) associées aux appels de travail
